# EUROPEAN PATENT SPECIFICATION

(11) **EP 2 217 462 B1**
(45) Date of publication and mention of the grant of the patent: **14.12.2011**
(21) Application number: 07859304.3
(22) Date of filing: 24.10.2007
(51) Int. Cl.: B60K 35/00

(54) **METHOD FOR SELECTIVELY ILLUMINATING A PUSHBUTTON AND APPARATUS, FOR CONTROLLING A DEVICE, IMPLEMENTING THE METHOD**
VERFAHREN ZUR GEZIELTEN BELEUCHTUNG EINES DRUCKKNOPFES UND DAS VERFAHREN IMPLEMENTIERENDE EINRICHTUNG ZUR STEUERUNG EINER VORRICHTUNG
PROCÉDÉ POUR ÉCLAIRER DE FAÇON SÉLECTIVE UN BOUTON-POUSSOIR ET APPAREIL, POUR COMMANDER UN DISPOSITIF, METTANT EN UVRE LE PROCÉDÉ

(43) Date of publication of application: 18.08.2010
(73) Proprietor: Renault Trucks, 69800 Saint Priest (FR)
(72) Inventor: CRAVE, Philippe, F-69003 Lyon (FR); LONGUEVILLE, François, F-69230 Saint Genis Laval (FR)
(74) Representative: Putet, Gilles
(86) International application number: PCT/IB2007/004266
(87) International publication number: WO 2009/053771

(56) References cited:
- DE-A1- 3 534 930
- DE-A1- 10 309 509
- DE-A1-102004 062 509

## Description

### TECHNICAL FIELD OF THE INVENTION

The invention relates to the field of lighted switches or pushbuttons and in particular to switches or pushbuttons which are adapted for use in daylight and half-light or night conditions.

### BACKGROUND OF THE INVENTION

It is well known to use lighted pushbuttons, especially back-lit pushbuttons, for controlling various devices or equipments of vehicles such as trucks or motor cars. Generally each pushbutton is associated with a light source which illuminates the button when the headlights are turned on. This allows the drivers to easily locate the pushbutton at night or in half-light conditions but gives no indication of whether the controlled device is on or off. In order to give such indication of the state of the controlled device, it was suggested to provide the pushbutton with a second light source which is off when the controlled device is in an off state and which illuminates the pushbutton when the controlled device is in an on state. The major drawback of such implementation of two light sources is that at day time the light of the second light source is not powerful enough for the driver to know at a glance the status of the controlled device, and at night the added lights of the two light sources are too powerful and therefore dazzle or at least distract the driver. Another illuminating device is known by document DE 10 309 509 A1.

Therefore, a need exists for a pushbutton which, on the one hand, gives in any illumination conditions, the status of the controlled device without dazzling the driver and, on the other hand, in half-light or night conditions allows an easy localization of the pushbutton.

### SUMMARY OF THE INVENTION

Accordingly, one object of the invention is a method, for selectively illuminating a pushbutton or switch controlling a device having at least two states (off and on), which gives, in any illumination conditions, the status of the controlled device without dazzling the driver, and in half-light or night conditions allows an easy localization of the pushbutton. According to the invention the method comprises the steps of:
- providing a display area of the pushbutton with a first light source and a second light source, said light sources being of different colors;
- in daylight conditions and when the device is in the off state, turning off both light sources;
- in daylight conditions and when the device or the pushbutton is in the on state, turning on both light sources;
- in half-light or night conditions and when the device or the pushbutton is in the off state, turning on the first light source;
- in half-light or night conditions and when the device or the pushbutton is in the on state, turning off the first light source and turning on the second light source.

By activating, in daylight, the two light sources when the controlled device functions, the invention allows the drivers to catch at a glance the status of the device even in bright light conditions. Whereas by activating, in half-light or night condition, only the second light source when the device is on, the invention gives an easy to catch information without any risk of dazzling or distracting the driver. This is especially important when the pushbuttons or switches are grouped in a same area. In addition, the first light source enables the drivers to easily locate the pushbutton in the half-light or night conditions.

A further object of the invention is an apparatus for controlling a device having at least two states (off and on), this apparatus implementing the method of the invention. According to the invention the apparatus comprises:
- a pushbutton or switch comprising a display area and being adapted for controlling directly or indirectly the device;
- a first light source and a second light source, both associated with the display area of the pushbutton and being of different colors;
- means for determining the luminosity conditions of the pushbutton environment,
- controls means adapted for at least controlling the two light sources according to the state of the controlled device or the pushbutton and to information given by the determination means, so as to :
- in daylight conditions and when the device or the pushbutton is in the off state, turn off both light sources;
- in daylight conditions and when the device or the pushbutton is in the on state, turn on both light sources;
- in half-light or night conditions and when the device or the pushbutton is in the off state, turn on the first light source and turn off the second light source;
- in half-light or night conditions and when the device or the pushbutton is in the on state, turn off the first light source and turn on the second light source.

Another object of the invention is an automotive vehicle comprising a driver's' cab with a dashboard, further comprising at least one apparatus according to the invention, adapted for controlling at least one device or function of the automotive, which pushbutton or switch is set on the dashboard and which determination means are adapted for determining the luminosity conditions within the driver's cab.

According to the invention the two light sources are of different colors. For example the two light sources may be of two different primary colors either additive or subtractive. One of the light sources may also be of a secondary color, the other light source being of a primary color which is a component of said secondary color. For example, the first light source can be of a primary color and the second light source of a secondary color comprising a component of the primary color of the first light source. Therefore, the same color code will be used when the controlled device is on, either at night or in daylight, as the color given by the two illuminated light sources together.will be close to the color given by the second light source alone. According to an embodiment of the invention, the first light source is yellow and the second light source is red, these warm colors reducing the risk of dazzling the driver.

The light sources of the invention may be of various types. According to an aspects of the invention each light source comprises at least one light emitting diode (LED). The used of such LEDs allows a reduction of the electricity consumption with an augmentation of the life time by comparison to incandescent light sources.

According to the invention the determination means may comprise various sensors or detectors such as a light detector set in the driver's cab, a rain detection sensor and means to evaluate the luminosity used by an automatic headlights turn on/off system. These sensing means can be used alone or in combination.

The various above aspects, embodiments or objects of the invention may be combined in various ways with each others provided the combined aspects, embodiments or objects are not incompatible or mutually exclusive.

### BRIEF DESCRIPTION OF THE DRAWINGS

Other aspects and advantages of the present invention will be apparent from the following detailed description made in conjunction with the accompanying drawings illustrating schematically a non-limitative embodiment of the invention.

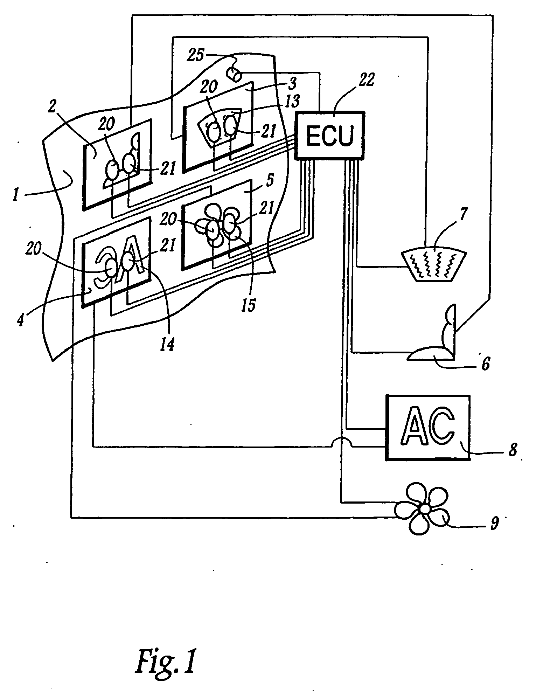

- Figure 1 illustrates schematically the backside of a group of pushbuttons or switches according to the invention controlling various functions or devices of an automotive vehicle according to the invention. It should be understood that the backside of the pushbuttons is the side not normally visible to the driver, opposite to the rear side accessible from the driver's cab and visible to the driver.
- Figure 2 is a rear view of the group of pushbutton illustrated figure 1 in daylight when no pushbutton is illuminated.
- Figure 3 is the same rear view as figure 2 in daylight where only one pushbutton, corresponding to a device in an on status, is fully illuminated.
- Figure 4 is the same rear view as figure 2 but in night or half-light conditions, where all the pushbuttons are illuminated with the corresponding first light source as all the control devices are in an off status.
- Figure 5 is the same rear view of the group of pushbuttons as figure 4 in night or half-light conditions where three of the pushbuttons are illuminated with the corresponding first light source whereas one of the pushbuttons is eliminated with the second light source as the corresponding control device is turned on.

Corresponding reference numbers indicate corresponding components in the various drawings.

### DETAILED DESCRIPTION OF SOME EMBODIMENTS

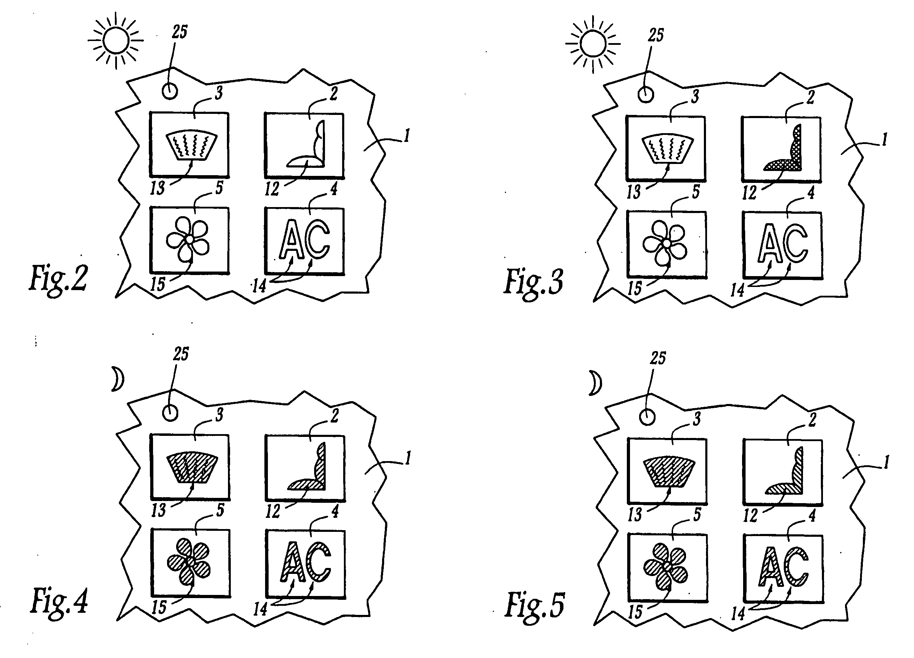

An automotive vehicle not illustrated in the figures, such as a motorcar or a truck, comprises a driver's cab (not shown) with a dashboard 1 partly illustrated in the figures. The dashboard 1 is equipped with at least one and, in the illustrated embodiment, four pushbuttons or switches 2 to 5. Each pushbutton 2 to 5 controls a device or a function of the automotive vehicle. According to the shown embodiment, the pushbutton 2 is adapted to control the heating system 6 of the driving seat. The second pushbutton 3 is adapted to control a defrosting system 7 of the automotive vehicle. The third pushbutton 4 is adapted to control an air conditioner 8 whereas the last and fourth pushbutton 5 of the example, is adapted to control a ventilation system 9. It should be understood that if pushbuttons 2 to 5 are here represented as being directly wired to their respective controlled device or system, the pushbuttons 2 to 5 may also be connected to an electronic control unit, in order to control indirectly their respective controlled device or system. This can be done in a way well known by the skilled man in the art and therefore does not need further explanation. As it can be seen on the figures 2 to 5, each pushbutton comprises a display area respectively 12, 13, 14, 15 formed on a surface of the pushbutton visible to the driver. On the shown embodiment, each of the display area 12 to 15 comprises a pictogram corresponding to the function of the associated controlled device or system, respectively 2, 3, 4, 5. The pictogram can be a transparent or translucent area with the otherwise opaque visible surface of the pushbutton. The pictogram can also be a drawing on a transparent or translucent surface, the drawing comprising opaque lines.

According to the invention, each display area 12 to 15 is associated with two light sources 20, 21, situated on the backside of the corresponding pushbuttons. The light sources 20, 21 are controlled by an electronic control unit (ECU) 22. The first light sources 20 are for example yellow and the second light sources 21 are for example red. Other colors could be chosen, and different pushbuttons could have different set of colors for their two light sources. Preferably, the colors and the respective intensity/luminosity for the two light sources will be chosen so that the second light sources will be comparatively more visible to the user or driver than the first sources. For reasons which will be clearly understood from the description below, the ECU 22 is further connected to each of the control device or system 7 to 9. The same ECU 22 could also perform the functions stated above of being a control interface between the pushbuttons and the associated devices. The ECU 22 can also be connected to a vehicle communication data bus, such as a CAN-bus, on which many operating parameters of the vehicle are available. The automotive vehicle according to the invention further comprises means 25 for determining the luminosity conditions, preferably more particularly around the pushbuttons 2 to 5 environment, i.e. in the present embodiment, the driver's cab of the automotive vehicle. The determination means 25 may be of any suitable type and can, for example, comprise a photoelectric cell mounted on the dashboard as shown on the illustrated embodiment. The photoelectric cell is connected to the ECU 22.

The apparatus, formed by the pushbuttons 2 to 5, the light sources 20, 21, the determination means 25 and the control means comprising the ECU 22, allows the driver to control each of the devices or systems 7 to 9, each of which able to have at least two states: an on state and an off state.

The ECU 22 implements the method for selectively illuminating the display areas of the pushbuttons 2 to 5 according to the invention.

The ECU 22 uses the photoelectric cell of the determination means 25 in order to monitor the illumination conditions within the driver's car and determine whether these illuminating conditions correspond to daylight as schematically depicted by the sun on figures 2 and 3, or to half-light or night conditions as schematically depicted by the moon quarter on figures 4 and 5. This monitoring can be performed continuously, or from time to time, and/or on the occurrence of a particular event of which the ECU 22 can be informed. The determination of whether the ambient luminosity corresponds to daylight or not can comprise an algorithm based on a comparison of the measured luminosity with a threshold. The threshold could vary. The ECU can also use information from several sensors to make such determination, for example by using the information from a rain detection sensor, from a vehicle speed sensor, etc... For example, the rain information could be used to set a different threshold.

In daylight conditions and when no devices are being activated, ECU 22 turns off all the light sources 20, 21.

When one of the pushbuttons has been pressed, for example pushbutton 2, in order to activate or turn on the corresponding device, here the seat heating system 6, the ECU 22 turns on the two corresponding light sources 20, 21 as illustrated on figure 3. The addition of the light of two light sources 20, 21 gives a powerful red-orange light which allows the driver to know at a glance that the corresponding device works and this even in bright light conditions.

In half-light or night conditions, the ECU 22 turns on the first light sources 20 of all the push buttons in order to help the driver to easily find the corresponding pushbutton when he wants to activate a particular device or system. When the driver turns on a particular device, for example the seat heating system 6, by pressing the corresponding pushbutton 2, the ECU 22 turns off the corresponding first light 20 and turns on the corresponding second light source 21. Therefore, according to this example and as shown on figure 5, in half-light or night conditions, the pushbutton 2 corresponding to the activated device of system 6, is only illuminated by the corresponding red second light source 21 whereas the other pushbuttons 3 to 5, which corresponding devices are turned off, are only illuminated by their corresponding yellow first light source 20. It is apparent that according to the invention, the illumination of the pushbuttons is, in half-light or in night conditions, done by only one light source whatever is the status of the corresponding control device. This avoids any dazzling of the driver even when the pushbuttons are grouped as shown by the figures. According to the embodiment shown and described above, the ECU 22 controls the light sources 20, 21 according to the status of the controlled devices or systems 6 to 9 but it should be understood that the ECU 22 may also control the light sources 20, 21 according to the positions or status of the pushbuttons 2 to 5. It should be also understood that the pushbutton 2 may also be replaced by switches having two positions, a position on and a position off.

In a same way, in the embodiment above described, the determination means comprise the photoelectric cell which senses directly the luminosity conditions around the pushbutton environment but, on vehicles not equipped with light sensors, determination means could also detect whether the headlights are on or off, the headlights on being considered by the determining means as half-light or night conditions and the headlights off being considered by the determining means as daylight conditions. The determining means would therefore monitor whether the driver has turned the head lights on or off. The determination means may then merely comprise an electrical wire connected to the headlight power supply and to the ECU 22, thereby informing the ECU that the headlights are on or off. The same type of determination means could also or alternatively monitor whether the interior lighting of the cabin of the vehicle is on or off, due to the drivers express intention, or due to an automatic process which can be linked to the opening of a door.

On vehicles equipped with automatic headlights turn on/turn off system, the means to evaluate the luminosity for the headlight system could be also used as part of the determining means used in the apparatus according to the invention. The algorithms to determine between daylight or nightly could be the same or not and have the same thresholds or not for headlight control and for pushbutton illumination control.

Furthermore, the invention was described in relation with a driver's cab of an automotive vehicle but the invention may be also implemented on any other kind of vehicles such as planes or trains, for example.

While the invention has been shown and described with reference to a preferred embodiment thereof, it should be understood by those skilled in the art that changes in form and details, may be made therein without departing from the spirit and scope of the invention as defined in the appended claims.

## Claims

1. Method for selectively illuminating a pushbutton or switch (2) controlling a device (6) having at least two alternative states (off and on), the method comprising the steps of:
- providing a display area (12) of the pushbutton with a first light source (20) and a second light source (21), said light sources (20, 21) being of different colors;
- in daylight conditions and when the device (6) or the pushbutton (2) is in the off state, turning off both light sources;
- in daylight conditions and when the device or the pushbutton is in the on state, turning on both light sources (20, 21);
- in half-light or night conditions and when the device (6) or the pushbutton (2) is in the off state, turning on the first light source (20) and turning off the second light source (21);
- in half-light or night conditions and when the device (6) or the pushbutton (2) is in the on state, turning off the first light source (20) and turning on the second light source (21).

2. Method according to claim 1, wherein the colors and the respective intensity/luminosity for the two light sources (20, 21) are chosen so that the second light source (21) is comparatively more visible to a user than the first source (20).

3. Method according to claim 1 or 2, wherein the first light source (20) is of a primary color and the second light source (21) is of a secondary color comprising a component of said primary color.

4. Method according to any of claims 1 to 3, wherein:
- the pushbutton (2) is set on a dashboard (1) within a driver's cab of a vehicle and adapted for controlling a device or function of the vehicle; and
- the light sources (20, 21) are turned on or off according to the luminosity conditions within the driver's cab.

5. Method according to any of claims 1 to 4, further comprising the steps of monitoring the luminosity conditions and comparing the measured luminosity with a threshold in order to determine whether luminosity conditions correspond to day light or to night or half light conditions.

6. Method according to claim 5, wherein the step of monitoring the luminosity conditions uses information from several sensors.

7. Method according to claim 5, wherein the step of monitoring the luminosity conditions uses rain information from a rain detection sensor to set the threshold.

8. Apparatus for controlling a device (6) having at least two alternative states (off and on), comprising:
- a pushbutton or switch (2) comprising a display area (12) and being adapted for controlling directly or indirectly the device (6);
- a first light source (20) and a second light source (21), both associated with the display area (12) of the pushbutton (2) and being of different colors;
- means (25) for determining the luminosity conditions of the pushbutton (2) environment,
- controls means (22) adapted for controlling the two light sources (20, 21) according to the state of the controlled device (6) or pushbutton (2) and to information given by the determination means (25), so as to:
- in daylight conditions and when the device or the pushbutton is in the off state, turn off both light sources (20, 21):
- in daylight conditions and when the device or the pushbutton is in the on state, turn on both light sources (20, 21):
- in half-light or night conditions and when the device or the pushbutton is in the off state, turn on the first light source (20) and turn off the second light source (21);
- in half-light or night conditions and when the device or the pushbutton is in the on state, turn off the first light source (20) and turn on the second light source (21).

9. Apparatus according to claim 8, wherein the colors and the respective intensity/luminosity for the two light sources (20, 21) are chosen so that the second light source (21) is comparatively more visible to a user than the first source (20).

10. Apparatus according to claim 8 or 9, wherein the first light source (20) is of a primary color and the second light source (21) is of a secondary color comprising a component of said primary color.

11. Apparatus according to any of claims 8 to 10, wherein each light source (20, 21) comprises at least one LED.

12. Automotive vehicle comprising a driver's' cab with a dashboard (1), further comprising at least one apparatus according to any of claims 8 to 11, adapted for controlling at least one device or function of the automotive vehicle, which pushbutton or switch (2) is set on the dashboard and which determination means (25) are adapted for determining the luminosity conditions within the driver's cab.

13. Automotive vehicle according to claim 12, wherein the determination means (25) comprise a photoelectric cell mounted on the dash board, and/or means to evaluate the luminosity used by an automatic headlights turn on/turn off system, and/or a rain detection sensor.

14. Automotive vehicle according to any of claim 12 to 13, wherein the control means (22) are adapted to monitor the luminosity conditions and compare the measured luminosity with a threshold in order to determine whether luminosity conditions correspond to day light or to night or half light conditions., and wherein the control means (22) are adapted to use rain information from the rain detection sensor to set the threshold.

15. Automotive vehicle according to any of claims 12 to 14, wherein the control means (22) are adapted to control the light sources (20,21) according also to the speed of the vehicle.

## Patentansprüche

1. Verfahren zur selektiven Beleuchtung eines eine Vorrichtung (6) steuernden Druckknopfes oder Schalters (2), der wenigstens zwei alternative Zustände (ausgeschaltet und eingeschaltet) aufweist, wobei das Verfahren die Schritte aufweist:
- Versehen eines Anzeigebereichs (12) des Druckknopfes mit einer ersten Lichtquelle (20) und einer zweiten Lichtquelle (21), wobei die Lichtquellen (20, 21) unterschiedliche Farben aufweisen;
- Ausschalten beider Lichtquellen bei Tageslichtbedingungen und wenn die Vorrichtung (6) oder der Druckknopf (2) sich im ausgeschalteten Zustand befindet;
- Einschalten beider Lichtquellen (20, 21) bei Tageslichtbedingungen und wenn die Vorrichtung oder der Druckknopf sich im eingeschalteten Zustand befindet;
- Einschalten der ersten Lichtquelle (20) und Ausschalten der zweiten Lichtquelle (21) bei Halbdunkel- oder Nachtbedingungen und wenn die Vorrichtung (6) oder der Druckknopf (2) sich im ausgeschalteten Zustand befindet;
- Ausschalten der ersten Lichtquelle (20) und Einschalten der zweiten Lichtquelle (21) bei Halbdunkel- oder Nachtbedingungen und wenn die Vorrichtung (6) oder der Druckknopf (2) sich im eingeschalteten Zustand befindet.

2. Verfahren nach Anspruch 1, wobei die Farben und die jeweilige Intensität/Leuchtstärke für die zwei Lichtquellen (20, 21) so gewählt werden, dass die zweite Lichtquelle (21) für einen Benutzer vergleichsmäßig besser sichtbar als die erste Quelle (20) ist.

3. Verfahren nach Anspruch 1 oder 2, wobei die erste Lichtquelle (20) eine Primärfarbe aufweist und die zweite Lichtquelle (21) eine Sekundärfarbe aufweist, die eine Komponente der Primärfarbe umfasst.

4. Verfahren nach einem der Ansprüche 1 bis 3, wobei
- der Druckknopf (2) auf einem Armaturenbrett (1) in einer Fahrerkabine eines Fahrzeugs platziert wird und für eine Steuerung einer Vorrichtung oder Funktion des Fahrzeugs angepasst wird; und
- die Lichtquellen (20, 21) gemäß den Leuchtstärkebedingungen in der Fahrerkabine ein- oder ausgeschaltet werden.

5. Verfahren nach einem der Ansprüche 1 bis 4, das weiterhin die Schritte des Überwachens der Leuchtstärkebedingungen und des Vergleichens der gemessenen Leuchtstärke mit einem Schwellenwert umfasst, um zu bestimmen, ob Leuchtstärkebedingungen den Tageslicht- oder den Nacht- oder den Halbdunkelbedingungen entsprechen.

6. Verfahren nach Anspruch 5, wobei beim Schritt des Überwachens der Leuchtstärkebedingungen Informationen von mehreren Sensoren verwendet werden.

7. Verfahren nach Anspruch 5, wobei beim Schritt des Überwachens der Leuchtstärkebedingungen Regeninformationen von einem Regenerfassungssensor zur Einstellung des Schwellenwerts verwendet werden.

8. Einrichtung zur Steuerung einer Vorrichtung (6), die wenigstens zwei alternative Zustände (ausgeschaltet und eingeschaltet) aufweist, umfassend:
- einen Druckknopf oder Schalter (2), der einen Anzeigebereich (12) umfasst und für eine direkte oder indirekte Steuerung der Vorrichtung (6) angepasst ist;
- eine erste Lichtquelle (20) und eine zweite Lichtquelle (21), die beide dem Anzeigebereich (12) des Druckknopfes (2) zugeordnet sind und unterschiedliche Farben aufweisen;
- Mittel (25) zur Bestimmung der Leuchtstärkebedingungen der Umgebung des Druckknopfes (2);
- Steuereinrichtungen (22), die für eine Steuerung der zwei Lichtquellen (20, 21) gemäß dem Zustand der gesteuerten Vorrichtung (6) oder des Druckknopfes (2) und gemäß von den Bestimmungsmitteln (25) gelieferten Informationen angepasst sind, um:
- bei Tageslichtbedingungen und wenn die Vorrichtung oder der Druckknopf sich im ausgeschalteten Zustand befindet, beide Lichtquellen (20, 21) auszuschalten;
- bei Tageslichtbedingungen und wenn die Vorrichtung oder der Druckknopf sich im eingeschalteten Zustand befindet, beide Lichtquellen (20, 21) einzuschalten;
- bei Halbdunkel- oder Nachtbedingungen und wenn die Vorrichtung oder der Druckknopf sich im ausgeschalteten Zustand befindet, die erste Lichtquelle (20) einzuschalten und die zweite Lichtquelle (21) auszuschalten;
- bei Halbdunkel- oder Nachtbedingungen und wenn die Vorrichtung oder der Druckknopf sich im eingeschalteten Zustand befindet, die erste Lichtquelle (20) auszuschalten und die zweite Lichtquelle (21) einzuschalten.

9. Einrichtung nach Anspruch 8, wobei die Farben und die jeweilige Intensität/Leuchtstärke für die zwei Lichtquellen (20, 21) so gewählt werden, dass die zweite Lichtquelle (21) für einen Benutzer vergleichsmäßig besser sichtbar als die erste Quelle (20) ist.

10. Einrichtung nach Anspruch 8 oder 9, wobei die erste Lichtquelle (20) eine Primärfarbe aufweist und die zweite Lichtquelle (21) eine Sekundärfarbe aufweist, die eine Komponente der Primärfarbe umfasst.

11. Einrichtung nach einem der Ansprüche 8 bis 10, wobei jede Lichtquelle (20, 21) wenigstens eine LED umfasst.

12. Kraftfahrzeug, das eine Fahrerkabine mit einem Armaturenbrett (1) umfasst, das weiterhin wenigstens eine Einrichtung nach einem der Ansprüche 8 bis 11 umfasst, die für eine Steuerung wenigstens einer Vorrichtung oder Funktion des Kraftfahrzeugs angepasst ist, wobei der Druckknopf oder Schalter (2) auf dem Armaturenbrett platziert ist und wobei die Bestimmungsmittel (25) für eine Bestimmung der Leuchtstärkebedingungen in der Fahrerkabine angepasst sind.

13. Kraftfahrzeug nach Anspruch 12, wobei die Bestimmungsmittel (25) eine auf dem Armaturenbrett angebrachte photoelektrische Zelle und/oder Mittel zur Bewertung der von einem automatischen Schweinwerfer-Einschalt-/Ausschaltsystem verwendeten Leuchtstärke und/oder einen Regenerfassungssensor umfassen

14. Kraftfahrzeug nach einem der Ansprüche 12 bis 13, wobei die Steuereinrichtungen (22) für eine Überwachung der Leuchtstärkebedingungen und für einen Vergleich der gemessenen Leuchtstärke mit einem Schwellenwert angepasst sind, um zu bestimmen, ob Leuchtstärkebedingungen den Tageslicht- oder den Nacht- oder den Halbdunkelbedingungen entsprechen, und wobei die Steuereinrichtungen (22) für eine Verwendung von Regeninformationen von dem Regenerfassungssensor angepasst sind, um den Schwellenwert einzustellen.

15. Kraftfahrzeug nach einem der Ansprüche 12 bis 14, wobei die Steuereinrichtungen (22) für eine Steuerung der Lichtquellen (20, 21) auch gemäß der Geschwindigkeit des Fahrzeugs angepasst sind.

## Revendications

1. Procédé d'éclairage sélectif d'un bouton-poussoir ou interrupteur (2) qui commande un dispositif (6) ayant au moins deux positions alternées (marche et arrêt), le procédé comprenant les étapes suivantes :
- dotation d'une zone d'affichage (12) du bouton-poussoir d'une première source de lumière (20) et d'une seconde source de lumière (21), lesdites sources de lumière (20, 21) étant de différentes couleurs ;
- en conditions diurnes et quand le dispositif (6) ou le bouton-poussoir (2) est sur la position arrêt, l'extinction des deux sources de lumière ;
- en conditions diurnes et quand le dispositif ou le bouton-poussoir est sur la position marche, l'allumage des deux sources de lumière (20, 21) ;
- en conditions de pénombre ou nocturnes et quand le dispositif (6) ou le bouton-poussoir (2) est sur la position arrêt, l'allumage de la première source de lumière (20) et l'extinction de la seconde source de lumière (21) ;
- en conditions de pénombre ou nocturnes et quand le dispositif (6) ou le bouton-poussoir (2) est sur la position marche, l'extinction de la première source de lumière (20) et l'allumage de la seconde source de lumière (21).

2. Procédé selon la revendication 1, dans lequel les couleurs et l'intensité/la luminosité respective des deux sources de lumière (20, 21) sont choisies de telle sorte que la seconde source de lumière (21) soit comparativement plus visible par un utilisateur que la première source (20).

3. Procédé selon la revendication 1 ou 2, dans lequel la première source de lumière (20) est d'une couleur primaire et la seconde source de lumière (21) est d'une couleur secondaire comprenant une composante de ladite couleur primaire.

4. Procédé selon l'une quelconque des revendications 1 à 3, dans lequel :
- le bouton-poussoir (2) est placé sur un tableau de bord (1) dans l'habitacle d'un véhicule et adapté pour commander un dispositif ou une fonction du véhicule ; et
- les sources de lumière (20, 21) sont allumées ou éteintes en fonction des conditions de luminosité dans l'habitacle.

5. Procédé selon l'une quelconque des revendications 1 à 4, comprenant en outre les étapes de surveillance des conditions de luminosité et de comparaison de la luminosité mesurée à un seuil afin de déterminer si les conditions de luminosité correspondent à des conditions diurnes ou à des conditions nocturnes ou de pénombre.

6. Procédé selon la revendication 5, dans lequel l'étape de surveillance des conditions de luminosité utilise des informations provenant de plusieurs capteurs.

7. Procédé selon la revendication 5, dans lequel l'étape de surveillance des conditions de luminosité utilise des informations de pluie provenant d'un capteur de détection de pluie afin d'établir le seuil.

8. Appareil de commande d'un dispositif (6) ayant au moins deux positions alternées (marche et arrêt), comprenant :
- un bouton-poussoir ou interrupteur (2) comprenant une zone d'affichage (12) et étant adapté pour commander directement ou indirectement le dispositif (6) ;
- une première source de lumière (20) et une seconde source de lumière (21), toutes les deux associées à la zone d'affichage (12) du bouton-poussoir (2) et de différentes couleurs ;
- des moyens (25) de détermination des conditions de luminosité de l'environnement du bouton-poussoir (2) ;
- des moyens de commande (22) adaptés pour commander les deux sources de lumière (20, 21) en fonction de l'état du dispositif commandé (6) ou du bouton-poussoir (2) et d'informations données par les moyens de détermination (25), de façon à :
- en conditions diurnes et quand le dispositif ou le bouton-poussoir est sur la position arrêt, éteindre les deux sources de lumière (20, 21) ;
- en conditions diurnes et quand le dispositif ou le bouton-poussoir est sur la position marche, allumer les deux sources de lumière (20, 21) ;
- en conditions de pénombre ou nocturnes et quand le dispositif ou le bouton-poussoir est sur la position arrêt, allumer la première source de lumière (20) et éteindre la seconde source de lumière (21) ;
- en conditions de pénombre ou nocturnes et quand le dispositif ou le bouton-poussoir est sur la position marche, éteindre la première source de lumière (20) et allumer la seconde source de lumière (21).

9. Appareil selon la revendication 8, dans lequel les couleurs et l'intensité/la luminosité respective des deux sources de lumière (20, 21) sont choisies de telle sorte que la seconde source de lumière (21) soit comparativement plus visible par un utilisateur que la première source (20).

10. Appareil selon la revendication 8 ou 9, dans lequel la première source de lumière (20) est d'une couleur primaire et la seconde source de lumière (21) est d'une couleur secondaire comprenant une composante de ladite couleur primaire.

11. Appareil selon l'une quelconque des revendications 8 à 10, dans lequel chaque source de lumière (20, 21) comprend au moins une DEL.

12. Véhicule automobile comprenant un habitacle équipé d'un tableau de bord (1), comprenant en outre au moins un appareil selon l'une quelconque des revendications 8 à 11, adapté pour commander au moins un dispositif ou une fonction du véhicule automobile, lequel bouton-poussoir ou commutateur (2) est placé sur le tableau de bord et lesquels moyens de détermination (25) sont adaptés pour déterminer les conditions de luminosité dans l'habitacle.

13. Véhicule automobile selon la revendication 12, dans lequel les moyens de détermination (25) comprennent une cellule photoélectrique montée sur le tableau de bord, et/ou un moyen pour évaluer la luminosité utilisée par un système d'allumage/extinction automatique des feux de route, et/ou un capteur de détection de pluie.

14. Véhicule automobile selon l'une quelconque des revendications 12 et 13, dans lequel les moyens de commande (22) sont adaptés pour surveiller les conditions de luminosité et comparer la luminosité mesurée à un seuil afin de déterminer si les conditions de luminosité correspondent à des conditions diurnes ou à des conditions nocturnes ou de pénombre, et dans lequel les moyens de commande (22) sont adaptés pour utiliser les informations de pluie provenant du capteur de détection de pluie afin d'établir le seuil.

15. Véhicule automobile selon l'une quelconque des revendications 12 à 14, dans lequel les moyens de commande (22) sont adaptés pour commander les sources de lumière (20, 21) en fonction également de la vitesse du véhicule.
